Europäisches Patentamt

European Patent Office

Office européen des brevets

(19)

(11) Numéro de publication: **0 227 519**
**A1**

(12) **DEMANDE DE BREVET EUROPEEN**

(21) Numéro de dépôt: **86402538.2**

(22) Date de dépôt: **14.11.86**

(51) Int. Cl.⁴: **H 02 K 1/26**
**H 02 K 3/48**

(30) Priorité: **22.11.85 FR 8517335**

(43) Date de publication de la demande:
**01.07.87 Bulletin 87/27**

(84) Etats contractants désignés: **DE ES FR GB IT**

(71) Demandeur: **SOCIETE ELECTROMECANIQUE DU NIVERNAIS - SELNI**
**166, rue des Grands Champs**
**F-58000 Nevers (FR)**

(72) Inventeur: **Huron, Claude**
**Thomson-CSF SCPI 19, avenue de Messine**
**F-75008 Paris (FR)**

**Cousin, Joel**
**Thomson-CSF SCPI 19, avenue de Messine**
**F-75008 Paris (FR)**

(74) Mandataire: **Phan, Chi Quy et al**
**THOMSON-CSF SCPI 19, avenue de Messine**
**F-75008 Paris (FR)**

(54) Machine électrique à induit bobiné.

(57) Machine électrique à induit bobiné, comprenant un induit (3) ayant des encoches (4) présentant une section transversale à configuration constituée par un contour composite formé d'un contour semi-ovale (6) partant du fond (7) de ces encoches et prolongé vers l'ouverture d'entrée (9) de ces dernières, par un contour bitronconique convergent divergent (8) et des dents (16) présentant un corps ayant au niveau de sa partie située au-dessous de leur tête (17) une dimension de l'ordre de une fois et demie supérieure à celle de sa partie située au-dessus de leur racine (18).

EP 0 227 519 A1

## Description

### MACHINE ELECTRIQUE A INDUIT BOBINE

La présente invention concerne une machine électrique à induit bobiné.

Une machine électrique telle qu'un moteur universel comprend habituellement un inducteur et un induit concentrique bobinés. Un induit bobiné est souvent constitué par un paquet de tôles circulaires empilées dans le pourtour duquel sont formées des encoches longitudinales régulièrement espacées destinées à recevoir des spires de fils isolés électriques. Il est constaté que dans une machine électrique, pour un volume donné d'induit, le ratio de puissance disponible/volume d'induit est d'autant meilleur que le coefficient de remplissage des encoches de cet induit en fils électriques est grand.

Dans les machines électriques connues, les encoches de leur induit ont souvent une section transversale triangulaire dont le sommet arrondi formant le fond de ces encoches est orienté vers le centre de l'induit, et la base tournée vers la périphérie de ce dernier est ouverte sur l'extérieur à travers une fente longitudinale centrale relativement étroite définissant une entrée d'encoche. Une telle forme de section transversale d'encoche ne favorise pas un tassage du fil durant un bobinage de l'induit notamment effectué par une machine à bobiner automatique à haute cadence. Il en résulte que dans les machines électriques à induit bobiné connues, le coefficient de remplissage en fil des encoches de leur induit est faible et le ratio puissance disponible/ volume d'induit est médiocre.

En outre dans les induits des machines connues les dents ayant souvent une largeur relativement faible ne permettent pas de réaliser un bon circuit magnétique et par conséquent une bonne performance dans ces machines.

La présente invention ayant pour but d'éviter ces inconvénients permet de réaliser une machine électrique économique à induit bobiné comportant des encoches d'induit à coefficient élevé de remplissage en fils pourvues d'un bobinage présentant une excellente résistance à une déformation mécanique à un désassemblage des fils de ce bobinage et à une désolidarisation relative de la masse de ces fils vis-à-vis des tôles d'induit, dus aux contraintes électromagnétiques, thermiques de force centrifuge de vibration, etc., et présentant un bon ratio puissance disponible/volume d'induit et une bonne performance de fonctionnement.

Selon l'invention, une machine électrique à induit bobiné dans la périphérie duquel sont formées des dents définissant avec le stator de la machine un circuit magnétique, et des encoches destinées à recevoir des fils du bobinage d'induit, est caractérisée en ce qu'elle comprend un induit dans lequel d'une part les dents régulièrement espacées et en alternance avec des encoches présentent un corps ayant au-dessous de sa mi-hauteur, une partie à largeur uniforme et au-dessus de sa mi-hauteur, une partie à largeur progressivement élargie puis graduellement rétrécie à une dimension, au niveau juste en dessous de leur tête, de l'ordre de une fois et demie supérieure à celle de la partie à largeur uniforme et d'autre part les encoches en alternance avec les dents présentent une section transversale à configuration constituée par un contour composite formé d'un contour semi-ovale partant du fond de ces encoches et prolongé vers l'ouverture d'entrée de ces dernières, par un contour bitronconique convergent divergent.

Pour mieux faire comprendre l'invention, on en décrit ci-après un exemple de réalisation illustré par un dessin ci-annexé représentant une vue schématique d'une partie d'une coupe transversale d'une machine électrique réalisée selon l'invention.

L'invention est applicable aux machines électriques à induit bobiné, celles utilisées par exemple dans l'industrie automobile, dans la fabrication des appareils électroménagers, de l'outillage, etc., et en particulier aux moteurs électriques du type moteurs universels.

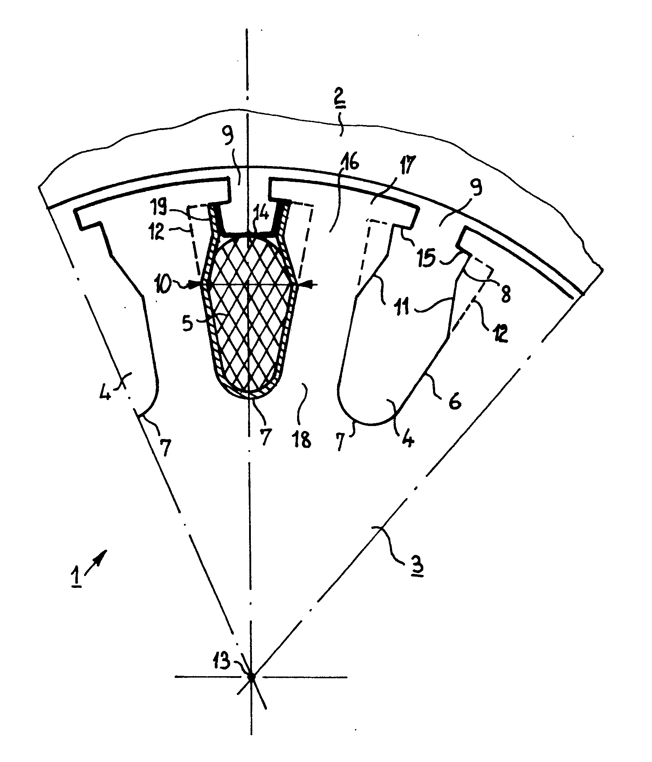

Une machine électrique à induit bobiné schématiquement et partiellement illustrée dans le dessin est un moteur universel 1 comprenant un inducteur 2 et un induit 3. L'induit 3 est constitué par un paquet de tôles circulaires empilées dans la périphérie desquelles sont découpées des encoches 4 régulièrement espacées, ouvertes vers l'extérieur, destinées à recevoir des fils électriques 5 qui constituent le bobinage de l'induit 3 et des dents 16 en alternance avec ces encoches 4, et destinées à réaliser avec l'inducteur 2 un circuit magnétique de la machine.

Dans le dessin pour faciliter la compréhension de l'invention, trois dents 16 sont représentées et une encoche 4 est montrée remplie de fils électriques tandis que les autres encoches 4 sont représentées vides.

Selon une caractéristique importante, la machine électrique à induit bobiné 1 comprend un induit 3 dans lequel d'une part les dents 16 régulièrement espacées et en alternance avec les encoches 4 présentent un corps ayant au-dessous de sa mi-hauteur, une partie à largeur uniforme 18 et au-dessus de sa mi-hauteur, une partie à largeur progressivement élargie puis graduellement rétrécie à une dimension, au niveau juste en-dessous de leur tête 17, de l'ordre de une fois et demie supérieure à celle de la partie à largeur uniforme 18, et d'autre part les encoches 4 en alternance avec les dents 16 présentent une section transversale, à configuration constituée par un contour composite formé d'un contour semi-ovale 6 partant du fond 7 de ces encoches et prolongé vers l'ouverture d'entrée 9 de ces dernières par un contour bitronconique convergent divergent 8. Une telle forme de section transversale permet aux encoches 4 d'avoir un renflement 10 dans leur zone de mi-hauteur pour recevoir un volume maximal prédéterminé de fils électriques 5 constituant le bobinage de l'induit 3, et un étranglement dont les parties inclinées servant de rampes de guidage 11 facilitant le glissement et le tassage des fils 5 dans les encoches 4 durant l'opération de bobinage de l'induit. Pour ces raisons les encoches 4 de l'induit 3 comprennent un coefficient élevé de remplissage en fils électriques 5 par rapport à celui des encoches d'un induit bobiné d'une machine électrique connue, dont la section transversale a un contour d'un triangle 12 à sommet arrondi dirigé vers l'axe 13 de l'induit et à base orientée vers l'extérieur, schématiquement représenté en traits discontinus dans le dessin, en superposition sur le contour composite 6-8 de l'encoche 4 de l'induit 3. En effet dans un induit d'une machine électrique connue, durant l'opération de bobinage, les fils électriques, après leur passage de l'entrée de l'encoche à section transversale triangulaire. ne sont plus guidés, se rangent au hasard dans cette encoche, et laissent entre eux des vides relativement importants. Il en résulte que le coefficient de remplissage de ces encoches à section transversale triangulaires ou pourvues d'une forme évasée vers l'extérieur est médiocre. Par conséquent pour loger une quantité prédéterminée de fils électriques, les machines électriques connues exigent des encoches d'induit de dimension plus grande que celle des encoches 4 de l'induit 3 de la machine électrique 1 illustrée, réalisée selon l'invention, et par conséquent des induits de dimensions plus importantes. Le ratio puissance disponible/volume d'induit dans une machine électrique connue est de ce fait inférieur à celui d'une machine électrique à induit bobiné 1 réalisée selon l'invention.

Les fils électriques 5 rangés dans les encoches 4 d'un induit pour former un bobinage d'induit sont habituellement imprégnés d'une résine durcissable qui les rend solidaires de l'induit et les maintient collés entre eux. Ces fils électriques 5 sont en outre retenus dans ces encoches 4 par des cales 14 qui s'appuyent d'un côté sur les fils 5 et du côté opposé sur les rebords saillants 15 des entrées 9 de ces encoches 4.

Dans le fonctionnement. les machines électriques à induit bobiné tournent souvent à des vitesses élevées allant de quelques milliers de tours par minute à plusieurs dizaines de milliers de tours par minute. Leurs induits et les bobinages de ces derniers sont soumis à des contraintes thermiques, électromagnétiques, de vibration, de force centrifuge ... importantes.

Dans les induits de machines électriques connues à encoches à section transversale triangulaire, les fils électriques mal tassés de leur bobinage qui sont soumis à ces contraintes, ne sont pas radialement retenus par des parois de ces encoches qui ont une forme évasée vers l'extérieur. Ces fils sont seulement maintenus par des cales de bobinage et par une résine d'imprégnation de ces fils qui assure leur cohésion et leur attache à ces encoches. La fiabilité des induits bobinés de ces machines électriques connues dépend ainsi en grande partie de la qualité de collage ou de résistance mécanique de cette résine d'imprégnation.

Par contre dans un induit 3 d'une machine électrique 1 réalisée selon l'invention à encoches à section transversale à contour composite semi-ovale 6 et bitronconique convergent divergent 8, les fils électriques 5 bien tassés dans ces encoches et soumis à ces contraintes, sont avantageusement retenus directement par des parties ou rampes inclinées convergentes 11 du contour bitronconique 8 de ces encoches 4. Ces rampes 11 forment un étranglement et empêchent efficacement ces fils 5 de sortir de ces encoches. Par ailleurs les fils électriques 5 sont complémentairement maintenus en place dans ces encoches 4 d'une part par des cales 14 et d'autre part par une résine d'imprégnation de ces fils 5. L'étranglement formé par les parties convergentes 11 du contour bitronconique 8 contribue à renforcer cette résine d'imprégnation dans le maintien des fils 5 dans ces encoches 4.

La fiabilité d'un induit 3 d'une machine électrique réalisée selon l'invention est ainsi principalement assurée par la structure des encoches de l'induit 3 et subsidiairement par les cales de bobinage 14 et par une résine d'imprégnation des fils de bobinage 5.

L'étranglement défini dans les encoches 4 par la partie bitronconique 8 du contour composite de leur section transversale permet d'utiliser avantageusement dans le maintien des fils 5, des cales de bobinage économiques 14 à plus faibles dimensions transversales que celles des cales de bobinage habituellement montées dans les encoches à section transversale triangulaire 12 des induits bobinés des machines électriques connues.

Une bonne immobilisation des fils de bobinage 5 dans les encoches 4 de l'induit 3 permet de conserver facilement une fiabilité des connexions de ces fils 5 à un collecteur non représenté de la machine électrique 1, en particulier des connexions d'un type connu à crochets sertis à chaud.

Dans l'induit 3, les parois des encoches 4 sont de préférence recouvertes par un revêtement électriquement isolant 19.

Selon une autre caractéristique, dans l'induit 3, la configuration de la section transversale des encoches 4 formée d'un contour semi-ovale 6 et d'un contour bitronconique convergent divergent 8 est un contour composite résultant d'un enchaînement de courbes et de lignes brisées.

Dans une variante de réalisation non représentée, dans l'induit 3. la configuration de la section transversale des encoches 4 formée d'un contour semi-ovale 6 et d'un contour bitronconique 8 est un contour composite résultant d'un enchaînement de courbes uniquement.

Dans l'induit 3, les dents 16 en alternance avec les encoches 4 présentent un corps ayant au niveau de sa partie située au-dessous de leur tête 17 une dimension d'au moins une fois et demie supérieure à celle de sa partie à largeur uniforme 18 située audessus de leur racine.

Un tel élargissement des dents 16 permet une amélioration du circuit magnétique une meilleure utilisation de l'induction et une bonne performance de la machine électrique 1.

**Revendications**

1. Machine électrique à induit bobiné, dans la périphérie duquel sont formées des dents définissant avec le stator de la machine un circuit magnétique, et des encoches destinées à recevoir des fils du bobinage d'induit, caractérisée en ce qu'elle comprend un induit (3) dans lequel d'une part les dents (16) régulièrement espacées et en alternance avec des encoches (4) présentent un corps ayant au-dessous de sa mi-hauteur, une partie à largeur uniforme, et au-dessus de sa mi-hauteur, une partie à largeur progressivement élargie puis graduellement rétrécie à une dimension, au niveau juste en dessous de leur tête (17), de l'ordre de une fois et demie supérieure à celle de la partie à largeur uniforme, et d'autre part, les encoches (4) en alternance avec les dents (16) présentent une section tranversale à configuration constituée par un contour composite formé d'un contour semi-ovale (6) partant du fond (7) de ces encoches et prolongé vers l'ouverture d'entrée (9) de ces dernières, par un contour bitronconique convergent divergent (8).

2. Machine selon la revendication 1, caractérisée en ce que dans l'induit (3), la configuration de la section transversale des encoches (4) formée d'un contour semi-ovale (6) et d'un contour bitronconique convergent divergent (8) est un contour composite résultant d'un enchaînement de courbes et de lignes brisées.

3. Machine selon la revendication 1, caractérisée en ce que dans l'induit (3), la configuration de la section transversale des encoches (4) formée d'un contour semi-ovale (6) et d'un contour bitronconique convergent divergent (8) est un contour composite résultant d'un enchaînement de courbes uniquement.

4. Machine selon l'une des revendications 1 à 3, caractérisée en ce que dans l'induit (3) les parties inclinées du contour bitronconique convergent divergent (8), du contour composite de la section transversale des encoches (4) servent à la fois de rampes de guidage facilitant le glissement et le tassage des fils (5) durant l'opération de bobinage de l'induit (3), et d'étranglement empêchant l'échappement des fils (5) de ces encoches et contribuant à renforcer la résine d'imprégnation de bobinage, dans le maintien de ces fils.

**Office européen des brevets**

# RAPPORT DE RECHERCHE EUROPEENNE

Numero de la demande

EP 86 40 2538

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | FR-A-1 426 770 (BIGLINO)<br>* Page 2, colonne de gauche, ligne 1 - page 2, colonne de droite, ligne 3; figures 1,2 * | 1,2 | H 02 K 1/26<br>H 02 K 3/48 |
| A | | 4 | |
| | --- | | |
| Y | DE-C- 734 447 (R. BOSCH GmbH)<br>* Figure unique * | 1,3 | |
| | --- | | |
| A | DE-B-1 211 323<br>(SIEMENS-SCHUCKERTWERKE AG)<br>* Colonne 3, ligne 55 - colonne 4, ligne 6; colonne 4, lignes 14-29; figure 2 * | 4 | |
| | ----- | | |

DOMAINES TECHNIQUES RECHERCHES (Int. Cl.4)

H 02 K

Le présent rapport de recherche a été établi pour toutes les revendications

| Lieu de la recherche | Date d'achèvement de la recherche | Examinateur |
|---|---|---|
| LA HAYE | 11-02-1987 | TIO K.H. |